# EUROPEAN PATENT APPLICATION

(11) **EP 3 352 344 A1**
(43) Date of publication of application: **25.07.2018**
(21) Application number: 15904048.4
(22) Date of filing: 15.09.2015
(51) Int. Cl.: H02K 9/06

(54) **VEHICULAR AC POWER GENERATOR**

(71) Applicant: Mitsubishi Electric Corporation, Chiyoda-ku Tokyo 100-8310 (JP)
(72) Inventor: AKIYOSHI Masao, Tokyo 100-8310 (JP); MINAMI Shinichiro, Tokyo 100-8310 (JP); HONSHO Kentaro, Tokyo 100-8310 (JP)
(74) Representative: Hoffmann Eitle
(86) International application number: PCT/JP2015/076078
(87) International publication number: WO 2017/046859

(57) **Abstract**

In the vehicular AC power generator of the present invention, a part (63) where the blade pitch is narrow and a part (62) where the blade pitch is wide are provided in the circumferential direction on a fan (11b) fixed in an annular shape to a pole core (10). In the narrow-pitch part (63), two or more blade portions (54) are provided in contact with each of the end surfaces of the two or more adjacent claw magnetic poles (60). This configuration can suppress deformation of the blade portions (54) caused by rotation and can suppress increase in noise occurring from the fan (11b).

## Description

### TECHNICAL FIELD

The present invention relates to an AC power generator which outputs AC voltage from a stator coil along with rotation of a rotor, and in particular, relates to a vehicular AC power generator that charges an on-vehicle battery and supplies power to an on-vehicle electric device.

### BACKGROUND ART

In recent years, in vehicular AC power generators, engine noise has been reduced in accordance with social requests for reducing vehicle exterior noise and for the purpose of improving merchantability by improvement in vehicle interior silence. Along with this, noise from a fan of the vehicular AC power generator which rotates at comparatively high speed has become harsh. This fan noise is, for example, a sound caused when cooling air in the radial direction from the fan interferes with a coil end, a magnetic pole, and the like of a stator which are cooled by the cooling air, and a wind noise caused by rotation of the fan itself. For example, as shown in FIG. 19 in Patent Document 1, it is disclosed that a rotor has eight claw magnetic poles, blades of a fan are provided two by two on a pair of the claw magnetic poles positioned symmetrically with respect to the rotation axis, so as to contact therewith, and blades are provided one by one on the other claw magnetic poles so as to contact therewith.

### CITATION LIST

### PATENT DOCUMENT

Patent Document 1: Japanese Patent No. 3279258
Patent Document 2: Japanese Laid-Open Patent Publication No. 3-218241

### SUMMARY OF THE INVENTION

### PROBLEMS TO BE SOLVED BY THE INVENTION

Therefore, the interval between the two blades provided two by two in a contact manner is narrow, and the interval between the blades provided one by one is wider than the former interval. In such blade arrangement, the frequency of noise caused by the blades having a narrow interval and the frequency of noise caused by the blades having a wide interval are greatly different from each other, and if the frequency of noise caused by the blades having a wide interval coincides with the frequency of noise occurring from the claw magnetic poles, further great noise can occur.

In addition, since the two pairs of the blades having narrow intervals are located opposite to each other with respect to the rotation axis, change in the blade interval periodically occurs per 180 degrees, and thus there is a problem that noises occurring due to the periodicity are strengthened by each other and thereby increased, for example.

### SOLUTION TO THE PROBLEMS

A vehicular AC power generator according to the present invention includes: a pole core housed inside a frame and having claw magnetic poles, the pole core being configured to rotate in synchronization with a rotary shaft; and a cooling fan fixed in an annular shape to the pole core. Cooling air introduced from outside by rotation of the cooling fan is caused to flow inside the frame so that the cooling air cools a stator winding and an AC output rectification element. The cooling fan has blade portions composed of a main plate and a plurality of blade standing from the main plate. The number of the blade portions is larger than the number of poles of the pole core. Two or more of the blade portions are in contact with an end surface of each of two or more of the claw magnetic poles that are adjacent to each other.

### EFFECT OF THE INVENTION

The vehicular AC power generator of the present invention can suppress deformation of the blade portions caused by rotation and can suppress increase in noise occurring from the fan.

### BRIEF DESCRIPTION OF THE DRAWINGS

[FIG. 1] FIG. 1 is a vertical sectional view of a vehicular AC power generator in embodiment 1 of the present invention.
[FIG. 2] FIG. 2 is a perspective view of a rotor of the vehicular AC power generator in embodiment 1 of the present invention.
[FIG. 3] FIG. 3 is a top view of a rear fan in embodiment 1 of the present invention.
[FIG. 4] FIG. 4 shows a relationship between a blade pitch number and a pitch of the rear fan in embodiment 1 of the present invention.

### DESCRIPTION OF EMBODIMENTS

### Embodiment 1

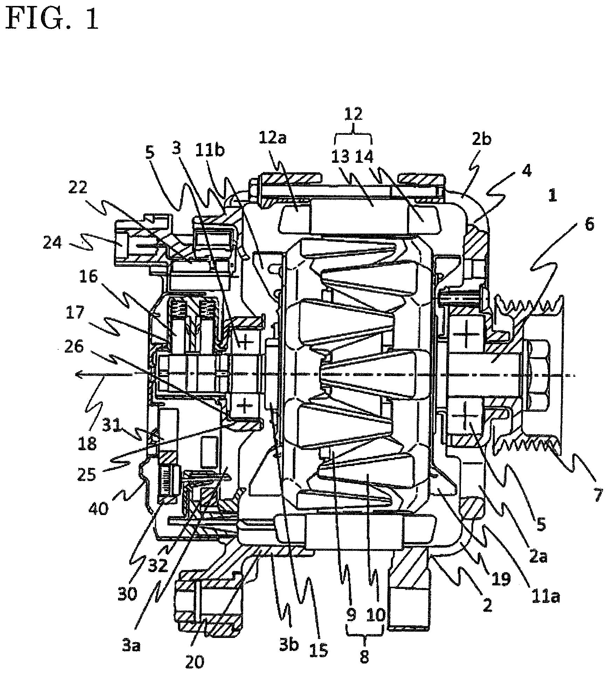

FIG. 1 is a vertical sectional view of a vehicular AC power generator 1 according to embodiment 1 of the present invention.

In FIG. 1, the vehicular AC power generator 1 includes: a casing 4 formed of a front bracket 2 and a rear bracket 3 which have substantially bowl shapes and are made of aluminum; a shaft 6 rotatably supported via a pair of bearings 5 by the casing 4; a pulley 7 fixed to an end of the shaft 6 extending toward the front side of the casing 4; a rotor 8 fixed to the shaft 6 and provided inside the casing 4; fans 11a, 11b fixed to both end surfaces in a rotation-axis direction 18 of the rotor 8; a stator 12 fixed to the casing 4 so as to surround the rotor 8; a pair of slip rings 15 which are fixed to an extension portion of the shaft 6 extending toward the rear side of the casing 4 and supply current to the rotor 8; a pair of brushes 16 sliding on the surfaces of the respective slip rings 15; a brush holder 17 that houses these brushes 16; a voltage regulator 22 which is provided on the rear side of the rear bracket 3 and regulates the magnitude of AC voltage generated in the stator 12; a connector 24 which is provided on the rear side of the rear bracket 3 and allows input and output of signals between an external device (not shown), and the voltage regulator 22 and the like; a rectification device 30 which is provided on the rear side of the rear bracket 3 and rectifies AC voltage occurring on the stator 12, into DC voltage; and a protection cover 40 attached to the rear bracket 3 so as to cover the brush holder 17, the voltage regulator 22, and the rectification device 30.

The rotor 8 includes: a field winding 9 which generates a magnetic flux by exciting current flowing therethrough; and a pole core 10 which is provided so as to cover the field winding 9 and in which magnetic poles are formed by the magnetic flux. The stator 12 includes: a cylindrical stator core 13 and a stator winding 14 which is wound around the stator core 13 and causes alternating current by variation in the magnetic flux from the field winding 9 along with rotation of the rotor 8.

The stator 12 is provided so as to surround the rotor 8, with the stator core 13 held by the opening ends of the front bracket 2 and the rear bracket 3 from both sides in the axial direction.

The bearing 5 on the rear side is fixed via a folder 26 to a bearing mounting portion 25 provided to the rear bracket 3.

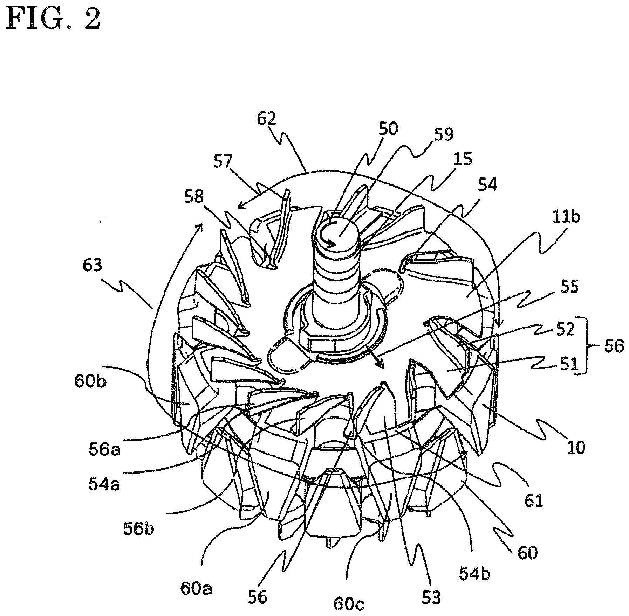

FIG. 2 is a perspective view of the rotor 8 as seen from the rear side of the vehicular AC power generator 1. An end surface of the pole core 10 is flat from near the shaft 59 to a side-surface chamfered portion 61 of a claw magnetic pole 60 of the pole core 10, and the rear fan 11b is fixed on the flat surface part by welding or the like. The rotor 8 rotates in the rotation direction (direction indicated by arrow 50). The rear fan 11b is manufactured by a working method of forming, in a main plate 51, a groove roughly along the outline of each blade 52, and then performing a bending process (see, for example, Patent Document 2, FIG. 7), and a hole 53 that is slightly larger than the outline of the blade 52 is formed on the rotation-direction side of the blade. A blade groove end 54 is an inner-circumferential-side end of the groove and remains in the main plate 51 even after the blade is formed. A blade portion 56 composed of the blade 52 and the main plate 51 that exists on the outer side in the radial direction (direction indicated by arrow 55) with respect to the adjacent blade groove ends 54, is subjected to a centrifugal force when the rotor 8 is rotated, and thus is to be greatly deformed.

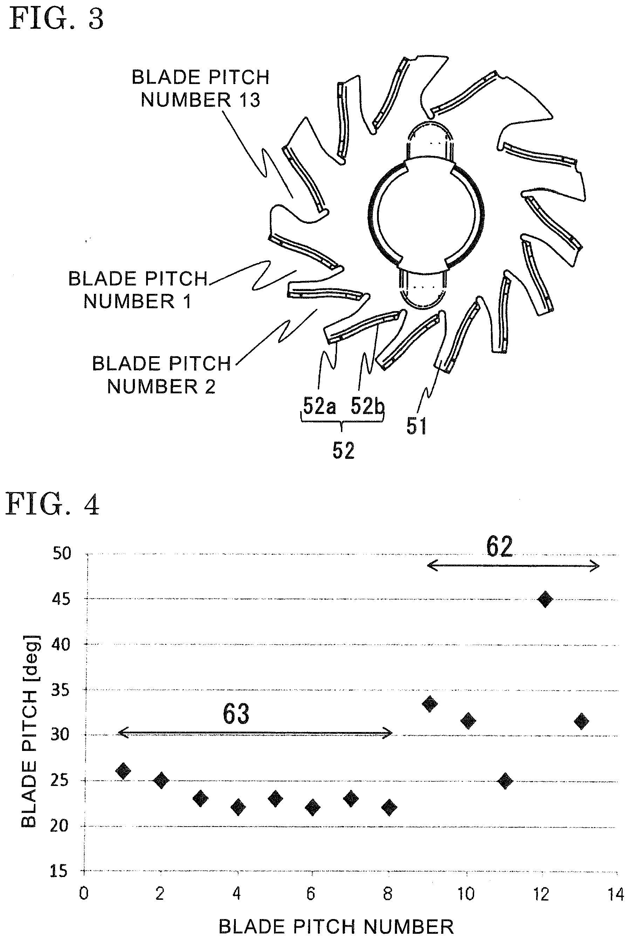

The blade 52 is joined to the main plate 51 at the base of the blade and stands orthogonally. As shown in a top view of the rear fan 11b in FIG. 3, the blade 52 is formed to have such an S-shaped cross section as to be gradually displaced frontward in the rotation direction from the rear edge which is the outer circumferential end to the front edge which is the inner circumferential end, and the S shape is formed by smoothly connecting a rear-edge-side arc shape 52a the center of which is located rearward in the rotation direction and a front-edge-side arc shape 52b the center of which is located frontward in the rotation direction. Further, as shown in FIG. 2, the height h of the blade 52 gradually increases from a front edge 58 toward a blade distal end 57 of the blade 52.

Next, operation of the vehicular AC power generator 1 configured as described above will be described. It is noted that the vehicular AC power generator 1 operates as a six-phase AC power generator having sixteen poles and ninety-six slots, but the number of poles and the number of slots are not limited thereto.

In the vehicular AC power generator 1, current is supplied from a battery (not shown) to the field winding 9 of the rotor 8 via the brush 16 and the slip rings 15, whereby a magnetic flux is generated. By the magnetic flux, N poles and S poles are alternately formed along the circumferential direction at the outer circumferential surface of the pole core 10. Meanwhile, rotation torque of an engine is transmitted from an output shaft of the engine to the shaft 6 via a belt (not shown) and the pulley 7, whereby the rotor 8 is rotated. Thus, a rotating magnetic field is given to the stator winding 14 of the stator 12, whereby an electromotive force is generated in the stator winding 14. AC current generated by the electromotive force is rectified by the rectification device 30 to charge the battery or to be supplied to an on-vehicle electric load.

The fans 11a, 11b rotate in conjunction with the rotor 8. On the front side, cooling air is sucked into the front bracket 2 through a front air inlet 2a and flows to near the rotor 8 in the rotation-axis direction 18. There, the cooling air bends in the centrifugal direction by the front fan 11a, to be discharged through a front air outlet 2b. On the rear side, cooling air is sucked into the protection cover 40 through a suction port provided in the protection cover 40, flows through heat dissipation fins provided to a plus-side heat sink 31 and a minus-side heat sink 32, toward a rear air inlet 3a of the rear bracket 3, and then flows to near the rotor 8 in the direction opposite to the rotation-axis direction 18. There, the cooling air bends in the centrifugal direction by the rear fan 11b, to be discharged through a rear air outlet 3b.

A part of heat generated by the stator 12 is dissipated from a coil end 12a to the cooling air bent outward in the radial direction by the fans 11a, 11b and discharged through the front air outlet 2b and the rear air outlet 3b, and another part of the heat is transmitted to the front bracket 2 and the rear bracket 3 and then dissipated from plural front ribs 19 of the front air outlet 2b and plural rear ribs 20 to the cooling air, whereby the stator 12 is cooled. A plus-side rectification element and a minus-side rectification element of the rectification device 30 are cooled by the cooling air flowing through the heat dissipation fins provided to the plus-side heat sink 31 and the minus-side heat sink 32.

Here, the rear fan 11b and the pole core 10 according to the present invention will be described.

The rotor 8 of the vehicular AC power generator 1 rotates at two to three times the rotation rate of the engine, and therefore often rotates at a high speed of 10000 rpm or more. By the high-speed rotation, a great centrifugal force is applied to each blade portion 56 including the blade 52, and if the centrifugal force exceeds an allowable stress of the material of the blades, the blade portion 56 deforms so as to move outward in the radial direction and toward the side opposite to the rotation-axis direction 18.

The above deformation of the blade portion 56 means that the height h of the blade 52 decreases. Thus, the flow amount of cooling air generated by the rear fan 11b decreases, so that the temperatures of parts rise. In addition, each blade distal end 57 moves outward in the radial direction, and therefore there is a possibility that the blade distal end 57 collides with the coil end 12a or the stator core 13 of the stator 12 and thus they are broken.

In order to prevent such cooling performance reduction or breakage, it is necessary to suppress deformation of the blade portions 56 including the blades 52.

The frequency of noise occurring from the pole core 10 is associated with the number of poles, and in the present configuration, the frequency is eight times the rotation rate. Therefore, if the number of the blades is eight, the noise having a frequency that is eight times the rotation rate is strengthened, so that the noise increases.

In order to suppress increase in noise and ensure the cooling air amount, it is necessary to provide a larger number of blades than the number of poles. However, in the case of using such a fan as to be manufactured by making cuts in a sheet metal and then performing a bending process, the main plate 51 joined to the base of the blade 52 is present on the opposite rotation-direction side and no main plate 51 is present on the rotation-direction side. Therefore, the circumferential-direction distance between the blade groove ends 54 of the adjacent blades is shortened, so that the blade portion 56 becomes more likely to deform.

In addition, as shown in FIG. 2, a part 62 where the pitches of the blades 52 are wide and a part 63 where the pitches are narrow are each provided at one location in the circumferential direction. FIG. 4 shows a relationship between the blade pitch number and the pitch. As shown in FIG. 3, one of the pitches in the narrow-blade-pitch part 63 is defined as blade pitch number 1, and using this as a reference, blade pitch numbers are serially assigned to the subsequent pitches in the counterclockwise direction (in FIG. 3, blade pitch numbers are assigned up to 13). In the narrow-pitch part 63, the adjacent pitches are slightly changed from each other. On the other hand, in the wide-pitch part 62, the average blade pitch is set to be 1.3 to 1.5 times the average blade pitch in the narrow-pitch part 63, and the pitches (in FIG. 4, blade pitch numbers 11, 12) near the center of the wide-pitch part 62 are changed such that the change amounts are approximately the same magnitudes as the pitches in the narrow-pitch part 63. Further, by providing a larger number of the blades 52 than the number of poles of the pole core 10, increase in noise occurring due to the periodicity of the blade intervals can be suppressed.

However, in the above configuration, the circumferential-direction distance between the blade groove ends 54 of the blade portions 56 in the narrow-pitch part 63 is further shortened.

Accordingly, in order to suppress deformation of the blade portions 56, the blades 52 in the narrow-pitch part 63 are arranged such that, for example, the flat surface part of the end surface of one claw magnetic pole 60a is in contact with the two blade portions 56a, 56b, a side of the blade portion 56a that is close to the blade groove end 54a is in contact with the flat surface part of the end surface of the claw magnetic pole 60a, and the outer circumferential side of the blade portion 56a is located between the claw magnetic pole 60a and the adjacent magnetic pole 60b. The other one blade portion 56b is arranged such that the outer circumferential side of the blade portion 56b is in contact with the flat surface part of the end surface of the claw magnetic pole 60a, and a side of the blade portion 56b that is close to the blade groove end 54b is located between the claw magnetic pole 60a and the adjacent claw magnetic pole 60c. According to this configuration, one claw magnetic pole 60 and two blades 52 have such a positional relationship as to form one structural unit, and such structural units are arranged adjacent to each other in the part 63 where the pitches of the blades 52 are narrow, whereby deformation of the blades is suppressed and increase in noise is also suppressed.

Thus, in embodiment 1, owing to the above arrangement of the claw magnetic poles 60 and the blades 52, deformation of the blade portions caused by rotation can be suppressed, whereby reduction in cooling performance due to reduction of the air flow amount, and the like can be suppressed, and in addition, increase in noise occurring from the fan can be suppressed.

It is noted that, within the scope of the present invention, the above embodiments may be modified or simplified as appropriate. In the present embodiment, only the rear side has been mentioned, but also on the front side, by configuring the fan and the pole core in the same manner as in the present embodiment, the same effects such as noise reduction and suppression of deformation of the blade portions can be obtained.

### DESCRIPTION OF THE REFERENCE CHARACTERS

1 vehicular AC power generator
2 front bracket
2a front air inlet
2b front air outlet
3 rear bracket
4 casing
5 bearing
6 shaft
7 pulley
8 rotor
9 field winding
10 pole core
11a front fan
11b rear fan
12 stator
13 stator core
14 stator winding
15 slip ring
16 brush
17 brush holder
18 rotation-axis direction
19 front rib
20 rear rib
22 voltage regulator
24 connector
25 bearing mounting portion
26 folder
30 rectification device
31 plus-side heat sink
32 minus-side heat sink
40 protection cover
51 main plate
52 blade
53 hole
54, 54a, 54b blade groove end
56, 56a, 56b blade portion
57 blade distal end
60, 60a, 60b, 60c claw magnetic pole

## Claims

1. A vehicular AC power generator comprising:
a pole core housed inside a frame and having claw magnetic poles, the pole core being configured to rotate in synchronization with a rotary shaft; and
a fan fixed in an annular shape to the pole core, wherein
cooling air introduced from outside by rotation of the fan is caused to flow inside the frame so that the cooling air cools a stator winding and an AC output rectification element,
the fan has blade portions each composed of a main plate and a blade standing from the main plate,
the number of the blade portions is larger than the number of poles of the pole core, and
two or more of the blade portions are in contact with an end surface of each of two or more of the claw magnetic poles that are adjacent to each other.

2. The vehicular AC power generator according to claim 1, wherein
each blade is formed to stand by forming, in the main plate, a groove along an outline of the blade and then performing a bending process, and
a hole larger than the outline of each blade is formed frontward in a rotation direction of the blade.

3. The vehicular AC power generator according to claim 2, wherein
two of the blade portions are arranged in contact with a flat surface part of an end surface of a first claw magnetic pole,
a side of a first blade portion that is close to an inner-circumferential-side end of the corresponding groove is in contact with the flat plate part of the end surface of the first claw magnetic pole, and a distal end side of the first blade portion is located between the first claw magnetic pole and a second claw magnetic pole adjacent thereto, and
a distal end side of a second blade portion is in contact with the flat surface part of the end surface of the first claw magnetic pole, and a side of the second blade portion that is close to an inner-circumferential-side end of the corresponding groove is located between the first claw magnetic pole and a third claw magnetic pole adjacent thereto on a side opposite to the second claw magnetic pole.

4. The vehicular AC power generator according to any one of claims 1 to 3, wherein
each blade has an S-shaped cross section formed by smoothly connecting a rear-edge-side arc shape the center of which is located rearward in a rotation direction of the rotary shaft, and a front-edge-side arc shape the center of which is located frontward in the rotation direction.

5. The vehicular AC power generator according to any one of claims 1 to 4, wherein
the blades standing on the fan have a first region and a second region in a circumferential direction,
pitches of the blades in the first region are wider than pitches of the blades in the second region, and
the first region has a part where an angle difference between the adjacent pitches is approximately the same magnitude as the pitches of the blades in the second region.
